# NEUE EUROPÄISCHE PATENTSCHRIFT

(11) **EP 1 882 570 B2**
(45) Veröffentlichungstag und Bekanntmachung des Hinweises auf die Entscheidung über den Einspruch: **19.09.2012**
(45) Hinweis auf die Patenterteilung: 08.10.2008
(21) Anmeldenummer: 06015452.3
(22) Anmeldetag: 25.07.2006
(51) Int. Cl.: B27M 1/08, B27M 3/18, B27C 9/04, B23Q 1/01

(54) **Bearbeitungszentrum zur Bearbeitung lang gestreckter Werkstücke**
Machining centre for machining elongated workpieces
Centre d'usinage pour l'usinage de pièces allongées

(43) Veröffentlichungstag der Anmeldung: 30.01.2008
(73) Patentinhaber: Homag Holzbearbeitungssysteme AG, 72296 Schopfloch (DE)
(72) Erfinder: Schmieder, Volker, 72116 Mössingen (DE); Gauss, Achim, 72280 Dornstetten/Hallwangen (DE)
(74) Vertreter: HOFFMANN EITLE

(56) Entgegenhaltungen:
- EP-A- 0 562 216
- EP-A1- 0 873 817
- EP-A1- 1 247 611
- EP-A2- 0 664 185
- EP-A2- 1 304 188
- WO-A1-92/12816
- DE-A1- 10 026 069
- DE-A1- 19 518 965
- DE-A1-102004 027 888
- US-A- 5 468 101
- US-A1- 20030 024 363

## Beschreibung

### Technisches Gebiet

Die Erfindung betrifft ein Bearbeitungszentrum zur Bearbeitung lang gestreckter Werkstücke, insbesondere für Fenster, Türen, Wintergärten und dergleichen, nach dem Oberbegriff von Anspruch 1 und ein entsprechendes Verfahren zur Bearbeitung lang gestreckter Werkstücke.

### Stand der Technik

Es sind bereits Bearbeitungszentren zur Bearbeitung lang gestreckter Werkstücke bekannt. Eine solche Vorrichtung ist beispielsweise in der DE 10 2004 027 888 beschrieben.

Zwar ist es bei der dort offenbarten Vorrichtung möglich, eine Simultanbearbeitung mit zwei Stationen durchzuführen oder ein Werkstück an einer zweiten Station weiterzubearbeiten, während die erste Station ohne Zeitverlust das Werkzeug wechselt, jedoch hat dieses Prinzip den Nachteil, dass eine Simultanbearbeitung an den beiden Stationen nur in extremen Ausnahmefällen möglich und dann aufwändig ist. Ferner ist die Maschine aufgrund der in einem geringen Abstand angeordneten Tische nur zur Fertigung von geraden Fensterteilen und nur bedingt für die Rundbogen- bzw. nicht für die Türblattfertigung geeignet.

Ferner offenbart die EP 0 562 216 A ein Bearbeitungszentrum nach dem Oberbegriff von Anspruch 1.

### Darstellung der Erfindung

Der Erfindung liegt das technische Problem zugrunde, ein Bearbeitungszentrum zu schaffen, bei dem vor allem lang gestreckte Werkstücke in kürzerer Zeit als bisher bearbeitet werden können.

Dieses technische Problem wird durch eine Vorrichtung mit den Merkmalen des Anspruchs 1 und ein Verfahren mit den Merkmalen des Anspruchs 12 gelöst. Besonders bevorzugte Weiterbildungen der Erfindung sind Gegenstand der abhängigen Ansprüche.

Der Erfindung liegt der Gedanke zugrunde, ein Bearbeitungszentrum zur Bearbeitung lang gestreckter Werkstücke in der Weise zu gestalten, dass Tischeinheiten und eine Traverse mit Spindeleinheiten so angeordnet sind, dass die Werkstücke der Tischeinheiten gleichzeitig bearbeitet werden können und die Übergabe von einer ersten Tischeinheit zu einer zweiten Tischeinheit erleichtert wird. Zu diesem Zweck ist erfindungsgemäß vorgesehen, dass bei einem Bearbeitungszentrum der eingangs genannten Art die erste und die zweite Tischeinheit lang gestreckt und in ihrer Längserstreckung parallel zur Längserstreckung einer lang gestreckten Traverse ausgerichtet sind, wobei mindestens eine der Tischeinheiten senkrecht in Bezug auf die Traverse verfahrbar ist.

Hierdurch wird erreicht, dass nicht nur die Bearbeitung kurzer, sondern auch lang gestreckter Werkstücke, und ebenfalls Bogen- und Paneelfertigung möglich ist. Zur Bogen- und Paneelfertigung müssen lediglich andere Spannteile verwendet werden, wobei dann ggf. beide Tischeinheiten das jeweilige Werkstück tragen. Des Weiteren können die Werkstücke nach der Bearbeitung der ersten Längsseite von der ersten Tischeinheit zur zweiten Tischeinheit automatisch übergeben werden, sodass eine Bearbeitung der zweiten Längsseite vorgenommen und zugleich die erste Tischeinheit neu bestückt werden kann. Somit ist eine gleichzeitige Bearbeitung von - gegebenenfalls auch langen - Werkstücken an beiden Tischeinheiten möglich, was eine Erhöhung der Kapazität ergibt.

Um die Werkstücke sicher der Traverse zuführen zu können und die Übergabe des Werkstücks von der ersten zur zweiten Tischeinheit zu erleichtern, sind die erste und die zweite Tischeinheit mit Werkstückspannern., die seitlich in Richtung der Traverse angeordnet sind, versehen.

Ferner ist vorgesehen, dass für zumindest zwei Spindeleinheiten jeweils ein eigener Antrieb vorgesehen ist, um die Spindeleinheiten unabhängig voneinander verfahren zu können, sodass eine simultane Bearbeitung möglich ist, was eine weitere Erhöhung der Kapazität mit sich bringt.

Um eine möglichst zügige und variable Bearbeitung der jeweiligen Werkstücke zu ermöglichen, ist gemäß der Erfindung vorgesehen, dass die Spindeleinheiten auf gegenüberliegenden Seiten der Traverse angeordnet und bevorzugt zumindest drei, besonders bevorzugt zumindest vier Spindeleinheiten vorgesehen sind.

Obgleich die Werkstücke der ersten oder zweiten Tischeinheit auch manuell zugeführt werden können, ist gemäß einer Weiterbildung der Erfindung vorgesehen, dass das Bearbeitungszentrum ferner eine Beschickungseinrichtung für die erste und/oder zweite Tischeinheit aufweist. Somit kann das Verfahren automatisiert und die Kapazität erhöht werden.

Um die Zuführung der Werkstücke zu den Tischeinheiten - beispielsweise von einer vorgelagerten Maschine - zu erleichtern, ist gemäß einer Weiterbildung der Erfindung vorgesehen, dass die Beschickungseinrichtung einen Beschicktisch und ein verfahrbares Beschickelement aufweist, wobei das verfahrbare Beschickelement vorzugsweise lang gestreckt ist und in Längserstreckung parallel zur Längserstreckung der ersten Tischeinheit verläuft.

Darüber hinaus ist gemäß einer Weiterbildung der Erfindung vorgesehen, dass das Bearbeitungszentrum ferner eines Abnahmevorrichtung aufweist, die ein Abnahmeband und/oder einen Ablagetisch und/oder einen Greifer aufweisen kann. Somit wird das Herausfördern der Werkstücke aus dem Maschinenbereich automatisiert und die Kapazität erhöht, obgleich auch eine manuelle Entnahme denkbar wäre.

Um die Entnahme des Werkstücks von der zweiten Tischeinheit und ggf. die Weitergabe zu einer nachgelagerten Maschine zu erleichtern, ist gemäß einer Weiterbildung der Erfindung vorgesehen, dass das Abnahmeband parallel zur Längserstreckung der zweiten Tischeinheit angeordnet ist, um so die Werkstücke zum Ablagetisch fördern zu können.

Darüber hinaus ist gemäß einer Weiterbildung der Erfindung vorgesehen, dass an der Traverse ferner mindestens eine Werkzeugwechseleinheit vorgesehen ist, wobei bevorzugt mindestens eine Werkzeugwechseleinheit stationär angeordnet ist und/oder mindestens eine Spindeleinheit eine mitfahrende Werkzeugwechseleinheit aufweist. Dies ermöglicht, dass eine Neubestückung der Spindeleinheiten flexibel und in sehr kurzer Zeit möglich ist und somit die Kapazität erhöht wird.

### Kurze Beschreibung der Zeichnungen

- Fig. 1: zeigt schematisch eine Draufsicht eines Bearbeitungszentrums als bevorzugte Ausführungsform der vorliegenden Erfindung;
- Fig. 2: zeigt schematisch eine Seitenansicht eines Bearbeitungszentrums als bevorzugte Ausführungsform der vorliegenden Erfindung.

### Ausführliche Beschreibung bevorzugter Ausführungsformen

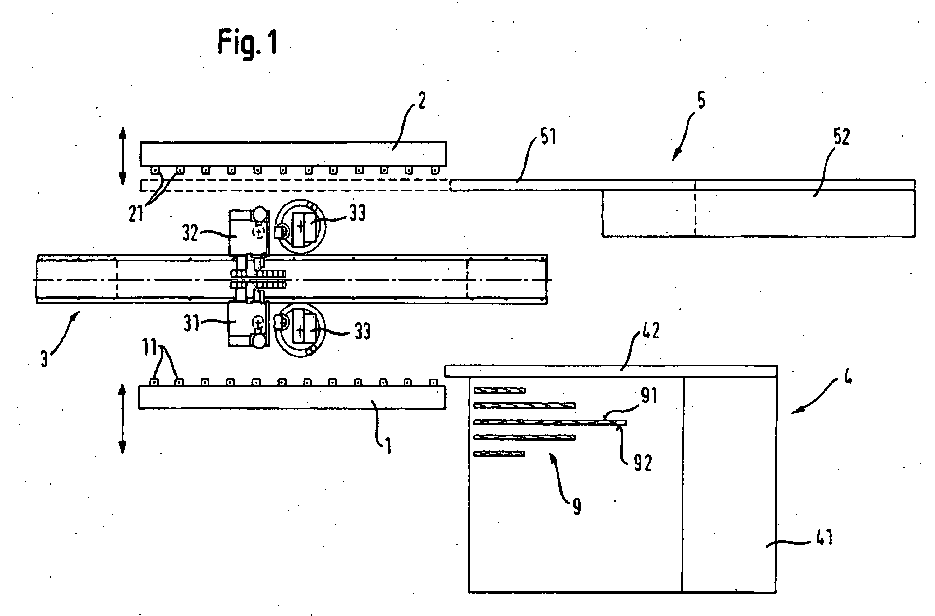

Fig. 1 zeigt ein Bearbeitungszentrum zur Bearbeitung lang gestreckter Werkstücke, insbesondere für Fenster, Türen, Wintergärten und dergleichen. Das Bearbeitungszentrum umfasst eine lang gestreckte Traverse 3 mit auf gegenüberliegenden Seiten angebrachten Spindeleinheiten 31, 32 und Tellerwechslern 33. Bei der Traverse 3 kann es sich beispielsweise um ein Portal oder einen Ausleger handeln, die ggf. in einer Richtung senkrecht zu ihrer Längserstreckung verfahrbar sein kann.

Auf einer Seite der Traverse 3 ist parallel zur Längserstreckung der Traverse 3 eine erste lang gestreckte Tischeinheit 1, die mindestens ein Spannelement 11 aufweist, angeordnet, wohingegen auf der anderen Seite der Traverse 3 parallel zur Längserstreckung der Traverse 3 eine zweite lang gestreckte Tischeinheit 2, die mindestens ein Spannelement 21 aufweist, angeordnet ist. Die Spannelemente 11, 21 sind jeweils in Richtung der Traverse 3 ausgerichtet und können vielfältig ausgestaltet sein, beispielsweise auch als Vakuumsauger.

Benachbart zur ersten Tischeinheit 1 ist parallel zur Längserstreckung der ersten Tischeinheit 1 eine Beschickungseinrichtung 4 angeordnet, wobei 42 ein verfahrbares Beschickelement, das lang gestreckt ist und in Längserstreckung parallel zur Längserstreckung der ersten Tischeinheit verläuft, bezeichnet. Auf dem Beschicktisch 41 sind Werkstücke 9, die eine erste Längskante 91 und eine zweite Längskante 92 aufweisen, angedeutet.

Benachbart zur zweiten Tischeinheit ist eine Abnahmevorrichung 5 angeordnet, die ein Abnahmeband 51, sowie einen Ablagetisch 52 aufweist. Greifer (nicht dargestellt) könnten ebenfalls eingesetzt werden.

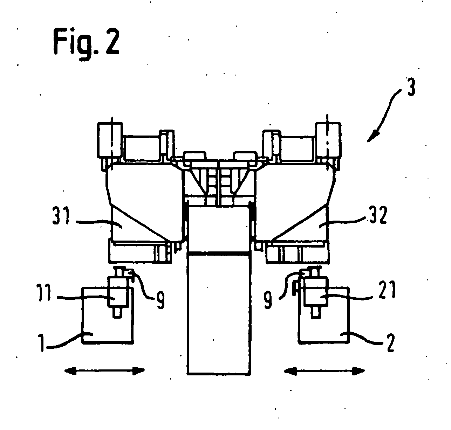

Fig. 2 zeigt eine Seitenansicht der Traverse 3 mit den Spindeleinheiten 31, 32, der Tischeinheiten 1, 2 und der jeweiligen Spannelemente 11, 21. In beiden Tischeinheiten 1, 2 sind jeweils Werkstücke 9 eingespannt.

Die Funktionsweise des Bearbeitungszentrums zur Bearbeitung lang gestreckter Werkstücke wird im Folgenden anhand der Fig. 1 und 2 beschrieben.

Zunächst werden, wie in Fig. 1 gezeigt, Werkstücke 9 manuell oder automatisch, von einer vorgelagerten Maschine kommend, auf den Beschicktisch 41 aufgelegt und vorzugsweise mit ihrer Längserstreckung parallel zur Längserstreckung der ersten Tischeinheit 1 ausgerichtet. Nach der Entnahme durch die verfahrbare Beschickvorrichtung 42 wird das erste bzw. die ersten Werkstück(e) 9 der ersten Tischeinheit 1 zugeführt und mittels mindestens eines Spannelementes 11 verspannt, sodass eine erste Längskante 91 des jeweiligen Werkstücks 9 der Traverse zugewandt ist. Im Anschluss wird die erste Tischeinheit 1 orthogonal zu ihrer Längserstreckung zu der Traverse 3 hin verschoben, und die erste Spindeleinheit 31, die vom Tellerwechsler 33 versorgt wird, bearbeitet das Werkstück im Bereich der ersten Längskante 91 oder eines anderen zugänglichen Abschnitts. Nach der Bearbeitung durch die erste Spindeleinheit 31 werden die Werkstücke 9 an die zweite Tischeinheit 2 übergeben, indem eine oder beide Tischeinheiten verfahren werden. Die Übergabe kann dabei unter der Traverse 3 oder an jeder beliebigen Stelle des Verfahrweges stattfinden. Dabei ist der mindestens eine Werkstückspanner 21 der zweiten Tischeinheit 2 geöffnet und kann die erste Längskante 91 des mindestens einen Werkstücks 9 umschließen, wobei im Anschluss sich der mindestens eine Werkstückspanner 11 der ersten Tischeinheit 1 öffnet und die zweite Längskante 92 des Werkstücks frei gibt.

Danach wird die zweite Tischeinheit 2 so in Position verfahren, dass eine Bearbeitung durch die zweite Spindeleinheit 32 im Bereich der zweiten Längskante 92 oder einem anderen zugänglichen Abschnitt des Werkstücks 9 stattfinden kann.

Gleich nach der Übergabe des Werkstücks von der ersten 1 zur zweiten Tischeinheit 2 kann die erste Tischeinheit erneut mit mindestens einem Werkstück 9 von der Beschickungseinrichtung 4 versorgt werden, und es können Werkstücke, die unterschiedliche Abmessungen haben können, simultan an den beiden Spindeleinheiten 31, 32 bearbeitet werden.

Nach Beendigung der Bearbeitung mit zweiten Spindeleinheit 32 im Bereich der zweiten Längskante 92 des Werkstücks 9 kann das Werkstück 9 über ein Abnahmeband 51 oder mittels Greifern (nicht gezeigt) aus dem Maschinenbereich herausgefördert und auf einen Tisch 52 abgelegt bzw. nach eine nachgelagerte Maschine weitergegeben werden.

## Patentansprüche

1. Bearbeitungszentrum zur Bearbeitung lang gestreckter Werkstücke (9), insbesondere für Fenster, Türen, Wintergärten und dergleichen, mit einer ersten lang gestreckten Tischeinheit (1), einer zweiten lang gestreckten Tischeinheit (2) und einer lang gestreckten Traverse (3) mit mindestens einer ersten (31) Spindeleinheit, die entlang der Traverse verfahrbar ist, wobei die erste (1) und die zweite (2) Tischeinheit in ihrer Längserstreckung parallel zur Längserstreckung der Traverse ausgerichtet sind und mindestens eine der Tischeinheiten senkrecht in Bezug auf die Traverse verfahrbar ist,
**dadurch gekennzeichnet, dass**
die erste und die zweite Tischeinheit mit Werkstückspannern (11, 21) versehen sind die seitlich, in Richtung der Traverse angeordnet sind, und
das Bearbeitungszentrum ferner mindestens eine zweite (32) Spindeleinheit aufweist, die entlang der Traverse (3) verfahrbar ist, wobei für zumindest zwei Spindeleinheiten (31, 32) jeweils ein eigener Antrieb vorgesehen ist, sodass die Spindeleinheiten unabhängig voneinander verfahren werden können,
wobei die Spindeleinheiten (31, 32) auf gegenüberliegenden Seiten der Traverse angeordnet sind.

2. Bearbeitungszentrum nach Anspruch 1, **dadurch gekennzeichnet, dass** zumindest drei, bevorzugt zumindest vier Spindeleinheiten vorgesehen sind.

3. Bearbeitungszentrum nach einem der vorhergehenden Ansprüche, **dadurch gekennzeichnet, dass** die Werkstückspanner (11, 21) eingerichtet sind, Bögen oder Paneele zu spannen.

4. Bearbeitungszentrum nach einem der vorhergehenden Ansprüche, d**adurch** gekenntzeichnet, dass das Bearbeitungszentrum ferner eine Beschickungseinrichtung (4) für die erste und/oder zweite Tischeinheit aufweist.

5. Bearbeitungszentrum nach Anspruch 4, **dadurch gekennzeichnet, dass** die Beschickungseinrichtung (4) einen Beschicktisch (41) und ein verfahrbares Beschickelement (42) aufweist.

6. Bearbeitungszentrum nach Anspruch 4, **dadurch gekennzeichnet, dass** das verfahrbare Beschickelement (42) lang gestreckt ist und in Längserstreckung parallel zur Längserstreckung der ersten Tischeinheit verläuft.

7. Bearbeitungszentrum nach einem der vorhergehenden Ansprüche, **dadurch gekennzeichnet, dass** das Bearbeitungszentrum ferner eine Abnahmevorrichtung (5) aufweist.

8. Bearbeitungszentrum nach Anspruch 7, **dadurch gekennzeichnet, dass** die Abnahmevorrichtung (5) ein Abnahmeband (51) und/oder einen Ablagetisch (52) und/oder einen Greifer aufweist.

9. Bearbeitungszentrum nach Anspruch 8, **dadurch gekennzeichnet, dass** das Abnahmeband (51) parallel zur Längserstreckung der zweiten Tischeinheit (2) angeordnet ist, um so die Werkstücke zum Ablagetisch (52) fördern zu können.

10. Bearbeitungszentrum nach einem der vorhergehenden Ansprüche, **dadurch gekennzeichnet, dass** an der Traverse (3) ferner mindestens eine Werkzeugwechseleinheit vorgesehen ist, wobei bevorzugt mindestens eine Werkzeugwechseleinheit stationär angeordnet ist und/oder mindestens eine Spindeleinheit eine mitfahrende Werkzeugwechseleinheit (33) aufweist.

11. Verfahren zur Bearbeitung lang gestreckter Werkstücke (9), insbesondere für Fenster, Türen, Wintergärten und dergleichen, unter Einsatz eines Bearbeitungszentrums nach einem der vorhergehenden Ansprüche, **dadurch gekennzeichnet, dass** die Werkstücke an der ersten (31) und der zweiten (32) Tischeinheit zumindest phasenweise simultan bearbeitet werden.

12. Verfahren nach Anspruch 11, **dadurch gekennzeichnet, dass** die Werkstücke von der ersten (31) zu der zweiten (32) Tischeinheit übergeben werden.

## Claims

1. Machining centre for machining oblong workpieces (9), in particular for windows, doors, conservatories and the like, having a first oblong bench unit (1), a second oblong bench unit (2) and an oblong crosspiece (3) with at least a first spindle unit (31) that is movable along the crosspiece, wherein the first (1) and second (2) bench unit in their longitudinal extension are oriented parallel to the longitudinal extension of the crosspiece and at least one of the bench units is movable perpendicularly with respect to the crosspiece, **characterised in that**
the first and second bench unit are provided with workpiece tensioners (11, 21) which are arranged laterally in the direction of the crosspiece and the machining centre further comprises at least a second (32) spindle unit that is movable along the crosspiece (3), wherein for each of at least two spindle units (31, 32) a dedicated drive is provided so that the spindle units can be moved independently of one another, wherein the spindle units (31, 32) are arranged on oppositely arranged sides of the crosspiece.

2. Machining centre according to claim 1, **characterised in that** at least three, preferably at least four spindle units are provided.

3. Machining centre according to any of the preceding claims, **characterised in that** the workpiece tensioners (11, 21) are set up to tension sheets or panels.

4. Machining centre according to any of the preceding claims, **characterised in that** the machining centre further comprises a feeding device (4) for the first and/or second bench unit.

5. Machining centre according to claim 4, **characterised in that** the feeding device (4) comprises a feeding bench (41) and a movable feeding element (42).

6. Machining centre according to claim 4, **characterised in that** the movable feeding element (42) is oblong and in its longitudinal extension runs parallel to the longitudinal extension of the first bench unit.

7. Machining centre according to any of the preceding claims, **characterised in that** the machining centre further comprises a take-off device (5).

8. Machining centre according to claim 7, **characterised in that** the take-off device (5) comprises a take-off belt (51) and/or a stacking bench (52).

9. Machining centre according to claim 8, **characterised in that** the take-off belt (51) is arranged parallel to the longitudinal extension of the second bench unit (2) so that by this means the workpieces can be conveyed to the stacking table (52).

10. Machining centre according to any of the preceding claims, **characterised in that** on the crosspiece (3) at least one tool exchange unit is further provided, wherein preferably at least one tool exchange unit is arranged in stationary manner and/or at least one spindle unit comprises a tool exchange unit (33) travelling along with it.

11. Method for machining oblong workpieces (9), in particular for windows, doors, conservatories and the like, using a machining centre according to any of the preceding claims, **characterised in that** the workpieces are machined simultaneously at least in phases on the first (31) and the second (32) bench unit.

12. Method according to claim 11, **characterised in that** the workpieces are transferred from the first (31) to the second (32) bench unit.

## Revendications

1. Centre d'usinage, pour l'usinage de pièces d'oeuvre (9) allongées, en particulier pour des fenêtres, portes, jardins d'hiver et analogues, avec une première unité formant table (1) allongée, une deuxième unité formant table (2) allongée, et une traverse (3) allongée, équipée d'au moins une première (31) unité de broche, déplaçable le long de la traverse, où la première (1) et la deuxième (2) unités formant table sont alignées, dans leur étendue longitudinale, parallèlement à l'étendue longitudinale de la traverse, et au moins l'une des unités formant table étant déplaçable perpendiculairement par rapport à la traverse,
**caractérisé en ce que**
la première et la deuxième unités formant table sont munies de dispositifs de bridage de pièces d'oeuvre (11, 21), disposés latéralement, dans la direction de la traverse,
et
le centre d'usinage présente en outre au moins une deuxième (32) unité de broche, déplaçable le long de la traverse (3),un entraînement propre étant chaque fois prévu pour au moins deux unités de broche (31, 32), de manière que les unités de broche puissent être déplacées indépendamment les unes des autres, où les unités de broche (31, 32) sont disposées sur des côtés opposés de la traverse.

2. Centre d'usinage selon la revendication 1, **caractérisé en ce que** au moins deux, et de préférence au moins quatre, unités de broche sont prévues.

3. Centre d'usinage selon l'une des revendications précédentes, **caractérisé en ce que** les dispositifs de bridage de pièces d'oeuvre (11, 21) sont agencés pour brider des feuilles ou des panneaux.

4. Centre d'usinage selon l'une des revendications précédentes, **caractérisé en ce que** le centre d'usinage présente en outre un dispositif de chargement (4) pour la première et/ou la deuxième unité formant table.

5. Centre d'usinage selon la revendication 4, **caractérisé en ce que** le dispositif de chargement (4) présente une table de chargement (41) et un élément de chargement (42) déplaçable.

6. Centre d'usinage selon la revendication 4, **caractérisé en ce que** l'élément de chargement (42) déplaçable est de forme allongée et s'étend, dans sa direction longitudinale, parallèlement à la direction longitudinale de la première unité formant table.

7. Centre d'usinage selon l'une des revendications précédentes, **caractérisé en ce que** le centre d'usinage présente en outre un dispositif d'enlèvement (5).

8. Centre d'usinage selon la revendication 7, **caractérisé en ce que** le dispositif d'enlèvement (5) présente une bande d'enlèvement (51) et/ou une table d'enlèvement (52) et/ou un preneur.

9. Centre d'usinage selon la revendication 8, **caractérisé en ce que** la bande d'enlèvement (51) est disposée parallèlement à la direction longitudinale de la deuxième unité formant table (2), pour ainsi pouvoir transporter les pièces d'oeuvre à la table d'enlèvement (52).

10. Centre d'usinage selon l'une des revendications précédentes, **caractérisé en ce que**, sur la traverse (3),est en outre prévue au moins une unité de changement d'outil, où, de préférence, au moins une unité de changement d'outil est disposée de façon stationnaire, et/ou au moins une unité de broche présente une unité de changement d'outil (33) se déplaçant en accompagnement.

11. Procédé d'usinage de pièces d'oeuvre (9) allongées, en particulier pour des fenêtres, portes, jardins d'hiver et analogues, avec utilisation d'un centre d'usinage selon l'une des revendications précédentes, **caractérisé en ce que** les pièces d'oeuvre sont usinées, simultanément, au moins par phases, sur la première (31) et la deuxième (32) unités formant table.

12. Procédé selon la revendication 11, **caractérisé en ce que** les pièces d'oeuvre sont transférées, de la première (31) à la deuxième (32) unité formant table.
